# EUROPÄISCHE PATENTSCHRIFT

(11) **EP 3 142 868 B1**
(45) Veröffentlichungstag und Bekanntmachung des Hinweises auf die Patenterteilung: **06.11.2019**
(21) Anmeldenummer: 15721675.5
(22) Anmeldetag: 05.05.2015
(51) Int. Cl.: B60B 19/00, F03C 1/247, B60K 7/00

(54) **RAD UND VERFAHREN ZUM ANTREIBEN EINES RADES**
WHEEL AND METHOD FOR DRIVING A WHEEL
ROUE ET PROCÉDÉ POUR ENTRAÎNER UNE ROUE

(30) Priorität: 16.05.2014 DE 102014209310
(43) Veröffentlichungstag der Anmeldung: 22.03.2017
(73) Patentinhaber: SAF-HOLLAND GmbH, 63856 Bessenbach (DE)
(72) Erfinder: WEBER, Karsten, 63741 Aschaffenburg (DE)
(74) Vertreter: Müller Schupfner & Partner Patent- und Rechtsanwaltspartnerschaft mbB
(86) Internationale Anmeldenummer: PCT/EP2015/059799
(87) Internationale Veröffentlichungsnummer: WO 2015/173065

(56) Entgegenhaltungen:
- DE-A1- 1 430 372
- GB-A- 2 118 496
- US-A- 574 200
- US-A- 1 759 833
- US-A- 3 672 458

## Beschreibung

Die Erfindung betrifft ein Rad, aufweisend einen äußeren Radring, eine Nabe und mindestens eine Stützeinrichtung, mit welcher der äußere Radring an der Nabe abgestützt ist. Die Erfindung betrifft des Weiteren ein Verfahren zum Betreiben eines solchen Rades.

Zum Antreiben eines Rades sind beispielsweise Verbrennungs- oder Elektromotoren bekannt. Die Übertragung der Kraft von dem Motor zum Rad erfolgt über sogenannte Antriebsstränge, beispielsweise ein Getriebe mit Wellen, Ketten, Riemen oder Ähnlichem. Auch hydraulisch oder pneumatisch arbeitende Motoren kommen im Stand der Technik zum Einsatz. Darüber hinaus ist es bekannt, zum Antreiben eines Rades Muskelkraft, Windkraft oder eine Hangabtriebskraft zu verwenden.

Federung und Lenkung werden zumeist durch bewegliche und/oder schwenkbare, also durch nicht starr mit dem Fahrzeug verbundene Aufnahmen für die drehbar gelagerte Nabe des Rads realisiert.

Das Bremsen wird in der Regel, bei Verbrennungsmotoren, durch Umwandlung kinetischer Energie in Wärme mit Hilfe von Bremsscheiben oder Trommeln und Reibbelägen bewirkt. Bei der Verwendung von Elektromotoren erfolgt das Bremsen zum Teil durch eine Umkehrung des Kraftflusses und damit Rückgewinnung elektrischer Energie (Rekuperation). Darüber hinaus sind weitere Verfahren zur Rückgewinnung von Energie bekannt, beispielsweise Kompressoren oder Retarder.

Die US-3,672,458, die GB 2 118 496 und die US-574,200 betreffen Fahrzeugräder mit Metallzylindern als Speichen, wobei durch Zu-bzw. Abführen eines Fluids in/aus den Metallzylindern die Nabe des Treibrads aus dem geometrischen Zentrum verschoben werden kann, sodass ein Antriebsmoment resultiert.

Die DE 14 30 372 betrifft einen Fahrzeugradantrieb, bei dem ein mit einer Nabe frei drehbar auf einem feststehenden Achszapfen gelagertes Treibrad an seinem Umfang mehrere voneinander getrennte, ringförmige Luftkammern enthält.

Die US-1,759,833 betrifft eine Antriebsvorrichtung für ein Fahrzeugrad.

Der Erfindung liegt die Aufgabe zugrunde, ein Rad und ein Verfahren zum Betreiben eines Rads bereitzustellen, welche eine erweiterte Funktionalität aufweisen.

Die Aufgabe wird erfindungsgemäß durch ein Rad mit den Merkmalen des Anspruchs 1 und ein Verfahren zum Antreiben eines Rades mit den Merkmalen des Anspruchs 12 gelöst. Bevorzugte Ausgestaltungen sind in den abhängigen Ansprüchen angegeben.

Das erfindungsgemäße Rad ist dadurch gekennzeichnet, dass eine Verstelleinrichtung (ein Verstellmechanismus) vorgesehen ist, mittels welcher die Nabe, insbesondere während einer Drehung des Rades, insbesondere kontinuierlich, relativ zum äußeren Radring verstellbar ist.

Das erfindungsgemäße Verfahren zum drehenden Antreiben eines Rades ist dadurch gekennzeichnet, dass die Nabe zum drehenden Antreiben des Rades, insbesondere kontinuierlich, relativ zum äußeren Radring verstellt wird.

Ein Grundgedanke der Erfindung besteht darin, dass die Nabe nicht starr mit dem Radring gekoppelt, sondern in unterschiedliche Richtungen gegenüber dem äußeren Radring verstellbar ist. Hierzu ist ein Verstellmechanismus beziehungsweise eine Verstelleinrichtung vorgesehen, welcher die Nabe aktiv gegenüber dem äußeren Radring bewegt, insbesondere in unterschiedliche radiale Richtungen. Der äußere Radring ist bevorzugt eine Felge, gegebenenfalls mit Reifen. Der Radring weist eine äußere Lauffläche auf, die zum Beispiel durch die Felge selbst oder durch den Reifen gebildet sein kann. Die Verstelleinrichtung ist bevorzugt ein Teil der Stützeinrichtung, welche den äußeren Radring an der Nabe abstützt. Die Verstelleinrichtung ist also bevorzugt zwischen der Nabe und dem äußeren Radring angeordnet. Durch die Verstelleinrichtung wird die Nabe aktiv relativ zu dem äußeren Radring verschoben und/oder der äußere Radring aktiv relativ zur Nabe bewegt, insbesondere, um durch diese Verschiebung beziehungsweise Bewegung eine Drehung des Rades zu bewirken. Die Verstelleinrichtung ist also eingerichtet, eine Kraft zwischen der Nabe und dem Radring zu erzeugen, mittels welcher eine Auslenkung der Nabe und/oder des Radrings (oder eines Teils hiervon) bewirkbar ist. Die zwischen Nabe und Radring wirkende Kraft kann zum drehenden Antreiben des Rades verwendet werden. Die Verstelleinrichtung wirkt auf die Stützelemente und kann auch als ein Teil der Stützelemente ausgebildet sein.

In einer bevorzugten Ausführungsform ist vorgesehen, dass die Verstelleinrichtung eingerichtet ist, die Nabe, insbesondere während der Drehung des Rades, insbesondere kontinuierlich, in unterschiedliche, insbesondere radiale Richtungen aus einem geometrischen Zentrum des Rades auszulenken. Durch die Auslenkung aus dem geometrischen Zentrum wird, insbesondere, wenn die Auslenkung schräg zu einer auf das Rad wirkenden Kraft erfolgt, eine Hebelkraft erzeugt, die eine Drehung des Rads bewirkt. Zum kontinuierlichen Antreiben des Rads kann die Nabe dann kontinuierlich in unterschiedliche radiale Richtungen bewegt werden, so dass die Hebelkraft kontinuierlich wirkt. Vorzugsweise ist die Verstelleinrichtung eingerichtet, die Nabe sowohl in unterschiedliche radiale Richtungen relativ zum Radring zu bewegen als auch die Nabe stufenlos um unterschiedliche Beträge (Strecken) in radialer Richtung zu verstellen. Unter dem geometrischen Zentrum wird vorzugsweise der geometrische Mittelpunkt oder der geometrische Schwerpunkt, insbesondere bezogen auf die quer zur Radachse verlaufende Fläche des Rades verstanden. Bei einem kreisrunden Rad ist dies der Kreismittelpunkt. Mathematisch lässt sich der Schwerpunkt beziehungsweise Mittelpunkt durch Mittelung aller Punkte der von dem Radring begrenzten Fläche des Rades ermitteln.

Die Verstelleinrichtung ist vorzugsweise eingerichtet, die Nabe entlang einer Umlaufbahn um ein geometrisches Zentrum des äußeren Radrings zu bewegen. Vorzugsweise ist die Verstelleinrichtung eingerichtet, im feststehenden Koordinatensystem des sich drehenden Rades eine Bewegung der Nabe entlang einer Kreisbahn um das geometrische Zentrum zu erzeugen.

Erfindungsgemäß weist die Stützeinrichtung mehrere, vorzugsweise mindestens drei Stützelemente auf, die sich zwischen der Nabe und dem Radring erstrecken. Die Verstelleinrichtung ist vorzugsweise eingerichtet, die Länge der Stützelemente zwischen der Nabe und dem Radring zu verändern. Besonders bevorzugt ist es, wenn die Verstelleinrichtung selbst auch den Radring an der Nabe abstützt oder zumindest zur Abstützung beiträgt und somit als Teil der Stützeinrichtung angesehen werden kann. Dementsprechend is es bevorzugt, dass die Stützelemente jeweils die Verstelleinrichtung umfassen, wobei die Verstelleinrichtung zur Einstellung der Länge der Stützelemente zwischen der Nabe und dem Radring ausgebildet ist. Dabei lassen sich die Stützelemente vorzugsweise jeweils einzeln ansteuern, so dass innerhalb eines bestimmten Bereichs der Radebene eine beliebige Positionierung der Nabe in der Ebene des Rades eingestellt werden kann. Die Nabe lässt sich also durch Variierung der Länge der einzelnen Stützelemente in der Ebene des Rades in einem bestimmten Bereich beliebig, insbesondere stufenlos, verschieben beziehungsweise verstellen.

Durch die auf diese Weise längenverstellbaren Stützelemente (beispielsweise Speichen und/oder Streben) lässt sich die Nabe gezielt und aktiv aus dem geometrischen Zentrum des Rades auslenken, so dass im Zusammenspiel mit einer auf das Rad wirkenden Kraft (beispielsweise die Gewichtskraft eines Fahrzeugs) ein Drehmoment auf das Rad erzeugt wird. Die Verstelleinrichtung kann beispielsweise als Teleskopeinrichtung ausgebildet sein. Beispielsweise können teleskopierbare Streben oder Speichen vorgesehen sein, die mittels eines Hubzylinders ein- und ausgefahren werden können. Grundsätzlich sind aber auch beliebige andere Ausführungsformen denkbar, welche die Nabe durch eine Veränderung der Länge der Stützelemente in der Radebene bewegen können. Beispielsweise können formveränderliche Stege oder Speichen zwischen der Nabe und dem Radring angeordnet werden, wobei die Form aktiv verändert werden kann, so dass die Nabe relativ zum Radring bewegt wird.

Die Verstelleinrichtung kann beispielsweise elektromechanisch und/oder hydraulisch und/oder pneumatisch betrieben sein. Wesentlich ist, dass nicht nur eine reine Federung beziehungsweise federnde Lagerung der Nabe vorgesehen ist, sondern die Nabe aktiv gegenüber dem Radring (oder umgekehrt) bewegt werden kann. Beispielsweise können die Speichen des Rades hierzu elektromechanisch, hydraulisch und/oder pneumatisch betriebene Hubzylinder umfassen. Die elektromechanisch, hydraulisch und/oder pneumatisch betriebene Verstelleinrichtung dient zur Verstellung, insbesondere zur Längen- und/oder Formverstellung der Stützelemente.

In einer weiteren bevorzugten Ausführungsform weist die Stützeinrichtung mehrere, vorzugsweise mindestens drei verformbare Stützelemente auf, die sich zwischen der Nabe und dem Radring erstrecken. Die verformbaren, insbesondere elastischen Stützelemente erlauben eine Relativbewegung zwischen Nabe und Radring. Zum aktiven Verstellen der Nabe ist die Verstelleinrichtung vorzugsweise eingerichtet, die Form und/oder die Elastizität und/oder die Vorspannung der Stützelemente, insbesondere unabhängig voneinander zu verstellen. Es lässt sich also die Form und/oder die Elastizität und/oder Vorspannung jedes einzelnen Stützelements einzeln verändern, so dass, beispielsweise durch unterschiedliche Elastizitäten der einzelnen Stützelemente, eine Verlagerung der Nabe relativ zum Radring bewirkt werden kann. Hierzu drückt beispielsweise ein erstes Stützelement die Nabe stärker zur gegenüberliegenden Seite des Radrings als ein zweites Stützelement. Durch kontinuierliche Änderungen der Formen, Elastizitäten beziehungsweise Vorspannungen der Stützelemente kann eine "Wanderung" der Nabe innerhalb des Radrings erzeugt werden.

In einer bevorzugten Ausführungsform handelt es sich bei dem Radring um einen im technischen Sinn formstabilen beziehungsweise steifen Ring. Es ist also nicht vorgesehen, dass sich die Form des Radrings wesentlich verändert. Dabei sind selbstverständlich geringe Verformungen aufgrund auftretender Lasten (beispielsweise die Gewichtskraft eines Fahrzeugs) nicht ausgeschlossen. Es kann sich also um eine in der grundsätzlichen Art bekannte Felge, beispielsweise eines Kraftfahrzeugs oder eines Fahrrads, handeln. Dabei ist es bevorzugt, dass die Verstelleinrichtung eingerichtet ist, die Position der Nabe unter Beibehaltung der Form des Radrings zu verstellen. Die Nabe wird also innerhalb des formstabilen Radrings bewegt. Hierzu werden beispielsweise die Stützelemente (Speichen, Stege oder Ähnliches) derart gesteuert verstellt beziehungsweise angepasst, dass zwar eine Bewegung der Nabe erfolgt, eine Verformung des Radrings aufgrund der Verstellung der Stützelemente aber unterbleibt.

In einer weiteren bevorzugten Ausführungsform kann vorgesehen sein, dass die Verstelleinrichtung eingerichtet ist, den äußeren Radring während der Drehung des Rades vorzugsweise kontinuierlich zu verformen. Dies kann aktiv durch den Verstellmechanismus beziehungsweise die Verstelleinrichtung erfolgen, indem beispielsweise in einer ersten Querrichtung (erste Durchmesserrichtung, erste Halbachse) eine stärkere Verkürzung des Abstands zwischen Nabe und entsprechendem Randumfang erfolgt als in einer zweiten Querrichtung (zweite Durchmesserrichtung, zweite Halbachse). Auf diese Weise kann beispielsweise eine Verformung des Radrings in einer Weise erfolgen, dass der äußere Radring auf einer ovalen, insbesondere elliptischen Umlaufbahn um eine Zentralachse bewegt wird. Es erfolgt also vorzugsweise eine lokale Verformung des Radrings, die entlang des Umfangs unterschiedlich ist. Grundsätzlich kann die Verformung auch unabhängig von den Stützelementen zwischen Nabe und Radring erfolgen, beispielsweise durch eine Verformung eines auf einer Felge angeordneten Reifens. Hierzu können in dem Reifen entsprechende Verformungselemente angeordnet sein.

Durch die Verformung des Radrings (Felge und/oder Reifen) lässt sich die Lauffläche beispielsweise an die Form beziehungsweise Kontur eines Untergrunds anpassen, auf welchem das Rad abrollt. So können beispielsweise Unebenheiten (zum Beispiel Bordsteinkanten, Stufen etc.) leichter überwunden werden. Hierzu kann gegebenenfalls aktiv eine lokale Einformung im Bereich eines zu überwindenden Hindernisses, beispielsweise einer zu überwindenden Kante oder Stufe, bewirkt werden.

Besonders bevorzugt ist es nach der Erfindung, dass eine Steuerungseinrichtung vorhanden ist, mittels welcher der Verstellmechanismus beziehungsweise die Verstelleinrichtung zum drehenden Antreiben des Rades steuerbar ist. Die Steuerungseinrichtung ist vorzugsweise eingerichtet, die Nabe kontinuierlich in der Ebene des Rades zu verstellen und/oder die Kontur des Radrings kontinuierlich zu verändern. Die Relativbewegung zwischen Nabe und Radring erfolgt vorzugsweise derart, dass eine auf die Nabe wirkende Kraft (beispielsweise die Gewichtskraft eines Fahrzeugs) eine Drehung des Rads bewirkt.

Das erfindungsgemäße Rad kann auch als ein aktives Rad beziehungsweise ein Rad mit einem eingebauten Antriebsmechanismus bezeichnet werden, wobei der Antriebsmechanismus ein Teil des Rads ist, welcher sich zusammen mit dem Rad dreht. Das Rad wird also dadurch drehend angetrieben, dass die Nabe gegenüber dem Radring verstellt und/oder der Radring lokal verformt wird. Auf diese Weise entsteht eine Hebelkraft, die eine Drehung des Rads bewirkt. Nabe und Radring werden also derart relativ zueinander verstellt, dass das Rad aufgrund einer Hebelkraft, die auf die Nabe wirkt, drehend angetrieben wird. Hierbei ist es bevorzugt, dass die Nabe aktiv entlang einer Umlaufbahn um ein geometrisches Zentrum des Radrings bewegt wird. Alternativ oder zusätzlich kann der Radring zum drehenden Antreiben des Rades kontinuierlich verformt werden, insbesondere derart, dass der Radring auf einer ovalen Umlaufbahn um die Nabe bewegt wird.

Die Verstelleinrichtung zur Verstellung von Nabe und Radring relativ zueinander beziehungsweise zur Verformung des Radrings stellt also eine Antriebseinrichtung für das Rad dar. Der Antrieb erfolgt durch ein aktives Auslenken der Nabe aus dem geometrischen Mittelpunkt des Rades und/oder ein aktives Verformen des Radrings derart, dass die auf die Nabe wirkende Kraft schräg zu der Verbindungslinie zwischen Nabe und Aufstandspunkt des Rads verläuft.

Die Erfindung kann auch folgendermaßen beschrieben werden:
Das Rad umfasst eine am äußeren Radius befindliche Felge, gegebenenfalls mit Reifen, oder einen Zahnkranz oder eine Riemenscheibe (äußeres Element, Radring). Dieses ist vorzugsweise rund und starr, kann gegebenenfalls aber auch elastisch und in seiner Geometrie veränderlich sein. Eine Nabe (inneres Element) des Rades ist auf einer Welle oder Achse drehbar gelagert. Die Nabe befindet sich zumindest zeitweise außerhalb der geometrischen Mitte des Rades. Es können Vorrichtungen oder Mittel zur Übertragung von elektrischer, pneumatischer oder hydraulischer Energie von der vorzugsweise stehenden Welle in die sich drehende Nabe beziehungsweise das sich drehende Rad vorgesehen sein. Des Weiteren kann eine Steuereinrichtung zur Steuerung der übertragenen Energie vorhanden sein.

Zwischen der Nabe (inneres Element) und dem äußeren Element sind Verbindungselemente, beispielsweise drei oder mehr Speichen oder Stege oder andersartig geformte, verbindende Elemente vorgesehen. Diese können ein- oder mehrreihig (in axialer Richtung) angeordnet sein. Die Verbindungselemente können außerdem gebogen oder gekreuzt oder als Scheren (ähnlich einem Hubwagen) angeordnet sein und können auch in Form von Kugeln oder Zylindern ausgeführt sein. Die verbindenden Elemente können erfindungsgemäß sowohl starr also auch elastisch sein.

Ein Aspekt der Erfindung besteht darin, dass die verbindenden Elemente Aktuatoren oder "aktive Elemente" sind. Die Verbindungselemente können starr und in ihrer Ausdehnung oder ihre Form veränderlich sein (beispielsweise elektromechanisch, magnetisch oder hydraulisch). Außerdem können die Verbindungselemente elastisch oder in ihrer Vorspannung und Steifigkeit veränderlich sein (beispielsweise pneumatisch, zum Beispiel pneumatische Muskeln; oder elektrisch: aktive Elemente wie Piezo-Metall-Komposite).

Die Verbindungselemente üben eine Kraft zwischen der Nabe und dem äußeren Element aus und bewirken somit eine Bewegung zwischen diesen. Durch eine kontinuierliche Bewegung lässt sich die Energie, welche in die Verbindungselemente eingebracht wird, in Vortriebsleistung des Rades umsetzen. Dies geschieht insbesondere dadurch, dass die Nabe unter Einsatz der aktiven Elemente gegenüber der geometrischen Mitte des äußeren Elements (Felge) verschoben wird. Wenn nun eine Kraft, beispielsweise die Gewichtskraft eines Fahrzeugs, an der Nabenmitte entlang der Senkrechten nach unten wirkt und die Position der Nabe in der Horizontalen verschoben wurde, entsteht ein Drehmoment, da der Reaktionspunkt, in diesem Fall der Radaufstandspunkt, hinter der Nabenmitte mit dem Kraftangriffspunkt liegt. Das Fahrzeug kommt somit ins Rollen. Werden die Aktuatoren (unter Einspeisung von Energie) so angesteuert, dass die Nabenmitte im nicht mitdrehenden Koordinatensystem stets dieselbe Position relativ zur Lage des Ursprungs des drehenden Koordinatensystems des äußeren Rades beziehungsweise Radelements behält, bleibt dieses Antriebsmoment auch unter Drehung des Rades, unabhängig von dessen Geschwindigkeit, aufrecht erhalten. Ein Fahrzeug in der Ebene wird also fortgesetzt "virtuell bergab rollen". Im mitdrehenden Koordinatensystem des Rades beziehungsweise des äußeren Radelements (Radring) würde die Nabe eine Kreisbahn beschreiben, ohne sich aber selbst zu drehen. Bei Umkehrung des Prinzips, also Verschiebung der Nabenmitte hinter den Radaufstandspunkt, wird eine Verzögerung erreicht, wobei auch eine Rekuperation von Energie möglich ist. Durch entsprechende dreidimensionale Anordnung der Stützelemente (aktive Elemente), beispielsweise 2x3 Elemente in zwei Ebenen, lässt sich die Nabe relativ zum umlaufenden äußeren Element in mehreren, erfindungsgemäß in fünf Freiheitsgraden verstellen, wodurch zusätzlich zum Antrieb eine Kontrolle von Spur, Sturz, Lenkwinkel und/oder eine Form der Federung bereitgestellt werden kann. Hinsichtlich der Federung ist mit entsprechender Steuerung auch eine "aktive" Dämpfung denkbar.

Der weitere, sechste Freiheitsgrad ist die Drehung um die Achse der Welle, auf der die Nabe gelagert ist. Dieser Freiheitsgrad ließe sich grundsätzlich auch mit einer entsprechenden Antriebswelle beziehungsweise einem Motor kontrollieren. Dieser ist aber durch die Erfindung zum Antrieb des Rades nicht mehr erforderlich.

Grundvoraussetzung für die Umwandlung von Energie in Bewegung ist bei dem erfindungsgemäßen Rad eine Kraft, die von außen auf den Umfang des Rades wirkt und die von einer Reaktionskraft der Nabe (oder umgekehrt) nicht vollständig kompensiert wird, da die Vektoren beider Kräfte nicht auf denselben Punkt zeigen oder nicht parallel zueinander liegen, so dass ein zusätzliches Moment oder eine weitere Kraft folgt, die beispielsweise die Trägheitskraft eines Fahrzeugs beim Beschleunigen oder die Reibkraft (Wind- und/oder Rollwiderstand) eines Fahrzeugs bei schneller Fahrt sein kann. Bei einer Anwendung an einem Fahrzeug wären dies die Schwerkraft der Masse, die auf der Achse oder Welle lastet, und die Reaktionskraft am Radaufstandspunkt auf der Straße. Bei einer Anwendung zum Antrieb einer Maschine könnten diese Kräfte beispielsweise von einem Riemen oder einer Kette kommen, die auf dem äußeren Umfang laufen, oder auch von einer Radialkraft, mit der eine Verzahnung am äußeren Umfang auf ein weiteres Zahnrad gedrückt wird.

Beim Einsatz als Lauf- und Antriebsrad an einem Fahrzeug ist die Vortriebskraft (und damit die Beschleunigung) proportional abhängig vom Weg, um den die Nabenmitte gegenüber der Radmitte (und damit dem Radaufstandspunkt) verstellt wird. Damit ist die maximale Antriebskraft begrenzt auf den Wert, der bei maximaler Verstellung erreicht werden kann. Die Vortriebskraft ist zudem proportional zu der auf der Achse lastenden Gewichtskraft, so dass in der Folge die erreichbare Beschleunigung unabhängig vom Beladungszustand des Fahrzeugs ist (unter der Voraussetzung, dass die Aktoren/aktiven Elemente es erlauben, die entsprechend notwendigen Kräfte aufzubringen). Darüber hinaus ist die erreichbare Beschleunigung über alle Drehzahlbereiche des Rades konstant (vorausgesetzt, die Aktoren/aktiven Elemente erlauben den dazu notwendigen Energiedurchsatz bei den entsprechenden Arbeitsfrequenzen). Vorzugsweise wird jedoch eine obere nutzbare Drehzahl beziehungsweise Arbeitsfrequenz der Aktoren definiert, wobei diese beispielsweise bei Metall-Piezokeramikelementen vergleichsweise hoch liegen kann.

Von der Charakteristik her liegt das erfindungsgemäße Antriebskonzept in einem Bereich zwischen einem Elektromotor (größtes Moment im Stand, annähernd konstante Leistungsabgabe über den nutzbaren Drehzahlbereich) und Verbrennungsmotor (mit der Drehzahl steigendes Moment und entsprechend stark steigende Leistungsabgabe).

Die maximale Kraft/Beschleunigung ist insbesondere vom Verhältnis des maximalen Verstellweges der Nabe zum Radius des Rades abhängig, also unabhängig von der Radgröße. Im theoretischen Idealfall ist die Obergrenze der Beschleunigung 1g (Kraft max. M * 1g).

Die Leistungsabgabe beziehungsweise der Leistungsumsatz steigt linear mit der Drehzahl und mit der beschleunigenden Masse (sofern diese auch auf dem Rad lastet und nicht etwa auf einem Anhänger mit "passiven Rädern").

Die äußere Kontur des Rades muss nicht zwangsläufig starr und rund sein. Beispielsweise kann vorgesehen sein, dass sich die gesamte Außenkontur des Rades in einer Weise verziehen lässt, dass diese beispielsweise als geneigte Ellipse erscheint, womit ein ähnlicher Vortriebseffekt wie oben beschrieben erreicht werden kann. Zum anderen könnte die Außenkontur des Rades nur lokal, also beispielsweise durch entsprechende aktive Elemente innerhalb des Gürtels eines Reifens, so verändert werden, dass sich die Spannungsverhältnisse zum Beispiele im Latsch des Reifens so verschieben, dass die wirksame Kraftlinie vor oder hinter die Nabenmitte verlagert wird. Auf diese Weise kann beispielsweise der Rollwiderstand eines Reifens kompensiert werden. Die Energie, die zur Überwindung des Rollwiderstands nötig ist, wird dabei in die aktiven Elemente im Gürtel des Reifens eingebracht. Auf diese Weise kann man ein System erhalten, dass auch bei Last und größerer Nachgiebigkeit des Reifens scheinbar reibungsfrei hin und her gerollt werden könnte. In einer weiteren bevorzugten Ausführungsform könnte mit einer Sensorik, die die Umgebung im Vorfeld abtastet, durch aktive Elemente die Kontur eines Reifens oder Rades in der Form an Hindernisse, wie zum Beispiel Treppen oder Bordsteinkanten angepasst werden. Diese könnten somit ohne Mühe überwunden werden.

Weiterhin wäre es bei entsprechender Ansteuerung der Aktuatoren auch möglich, aus oszillierenden Bewegungen - der entweder starr oder auch beweglich mit dem Fahrzeug oder dem Maschinenteil verbundenen - Welle/Achse (auf welcher die Nabe läuft) Energie in Antriebs- beziehungsweise Vortriebsleistung zu transformieren.

Durch die Erfindung ergibt sich die Möglichkeit, die Funktionen von Federung, Dämpfung, Lenkung, Antrieb und/oder Rekuperation in einem System, welches mittels Aktuatoren zwischen einem äußeren Rad und/oder Reifen/Felge und einer drehbar gelagerten Nabe angeordnet ist, zu vereinen. Hierbei kann auf weitere Antriebe (wie beispielsweise ein Elektromotor) im System verzichtet werden. Beispielsweise ist es möglich, ein Antriebssystem bereitzustellen, das vollkommen ohne drehende Teile auskommt (abgesehen von der drehenden Lagerung der Nabe).

Die aktiven Elemente beziehungsweise Aktoren können beispielsweise durch sichelförmige Speichen realisiert werden. Die Speichen können beispielsweise aus einem Federstahl bestehen, welcher beidseitig mit einer Piezokeramik beschichtet ist, so dass sie ihren Biegeradius je nach anliegender Spannung in den Piezoelementen vergrößern oder verringern möchten.

Die Erfindung wird nachfolgend anhand von bevorzugten Ausführungsformen, welche in den beiliegenden, schematischen Figuren dargestellt sind, weiter beschrieben. In den Figuren zeigt:
- Fig. 1: eine erste Ausführungsform eines erfindungsgemäßen Rades in einer Ruhestellung;
- Fig. 2: das Rad aus Fig. 1 in einer in einer Antriebsstellung;
- Fig. 3: eine zweite Ausführungsform eines erfindungsgemäßen Rades in einer Ruhestellung;
- Fig. 4: das Rad aus Fig. 3 in einer in einer Antriebsstellung; und
- Fig. 5: eine dritte Ausführungsform eines erfindungsgemäßen Rades.

Gleiche oder gleich wirkende Komponenten sind in sämtlichen Figuren mit denselben Bezugszeichen gekennzeichnet. Die anhand der einzelnen Figuren beziehungsweise Ausführungsformen beschriebenen Merkmale können, soweit technisch möglich, auch miteinander kombiniert werden.

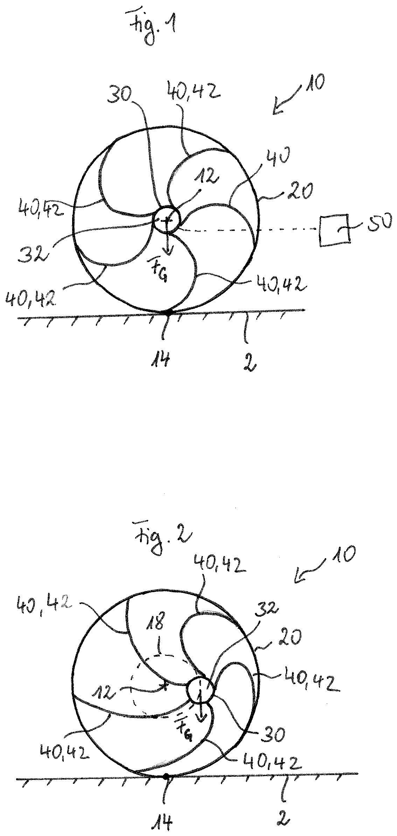

Eine erste Ausführungsform eines erfindungsgemäßen Rades 10 ist in den Fig. 1 und 2 gezeigt. Dabei zeigt die Fig. 1 das Rad 10 in einer Ruhestellung und die Fig. 2 in einer Antriebsstellung. Das Rad 10 umfasst einen äußeren Radring 20, beispielsweise eine Felge, die mit einem Reifen versehen sein kann. Der Radring 20 ist kreisförmig gestaltet und vorzugsweise starr. Das Rad 10 ist auf einer Bodenfläche 2 dargestellt und kontaktiert die Bodenfläche 2 an einem Bodenaufstandspunkt 14. Im Inneren des Rades 10 befindet sich eine Nabe 30 mit einer darin ausgebildeten Bohrung 32 zur Aufnahme einer Welle beziehungsweise Achse. Die Welle oder Achse kann drehstarr mit der Nabe 30 gekoppelt oder drehbar in dieser aufgenommen sein. Zwischen der Nabe 30 und dem Radring 20 erstreckt sich eine Stützeinrichtung 40, welche in der dargestellten Ausführungsform mehrere, insbesondere fünf einzelne Stützelemente 42 aufweist. Die Stützelemente 42 sind als sichelförmige Speichen gestaltet und erstrecken sich bogenförmig von einem äußeren Umfang der Nabe 30 zu einem inneren Umfang des Radrings 20. Alternativ kann auch eine andere Anzahl an Stützelementen 42 vorgesehen sein. Die Stützelemente 42 können auch in axialer Richtung zueinander versetzt oder in mehreren Reihen beziehungsweise Ebenen angeordnet sein.

Der geometrische Mittelpunkt des Rades 10, insbesondere des Radrings 20, ist mit dem Bezugszeichen 12 gekennzeichnet. Durch eine in der Nabe 30 angeordnete Achse beziehungsweise Welle wird auf das Rad 10 eine Gewichtskraft ausgeübt, die von dem Zentrum der Nabe 30 senkrecht nach unten gerichtet ist. Die Gewichtskraft ist mit F_{G} gekennzeichnet.

In der in Fig. 2 dargestellten Stellung ist die Nabe 30 durch die Stützelemente 42 aktiv aus der Mitte des Rades 10, also aus dem geometrischen Zentrum 12, ausgelenkt. Auf diese Weise wirkt die Gewichtskraft F_{G} nicht mehr in Richtung des Bodenaufstandspunkts 14, sondern bildet eine Hebelkraft, die das Rad 10 in eine nach rechts rollende Bewegung treibt. Um das Rad 10 kontinuierlich anzutreiben, ist erfindungsgemäß vorgesehen, dass die Nabe 30 mittels der Stützelemente 40 aktiv so bewegt wird, dass fortlaufend eine entsprechende Hebelkraft bestehen bleibt. Die Nabe 30 ist also derart aktiv innerhalb des Radrings 20 bewegbar, dass sie relativ zum Radring 20 eine Ring- oder Kreisbahn beschreibt. Die Umlauf, Ring- oder Kreisbahn ist in der Fig. 2 durch eine strichpunktierte Linie dargestellt und mit dem Bezugszeichen 18 gekennzeichnet.

Die aktive Verlagerung der Nabe 30 relativ zum Radring 20 erfolgt bei der Ausführungsform gemäß Fig. 1 und 2 durch ein aktives Einwirken auf die einzelnen Stützelemente 42 der Stützeinrichtung 40, indem die Vorspannung und/oder Elastizität der einzelnen Stützelemente 42 variiert wird. Dies kann zum Beispiel dadurch bewirkt werden, dass die Stützelemente 42 beidseitig mit einer Piezokeramik beschichtet sind, so dass die Vorspannung in Abhängigkeit einer angelegten elektrischen Spannung vergrößert oder verkleinert werden kann. Die Steuerung der Vorspannung erfolgt mittels einer nur schematisch in Fig. 1 angedeuteten Steuerungseinrichtung 50.

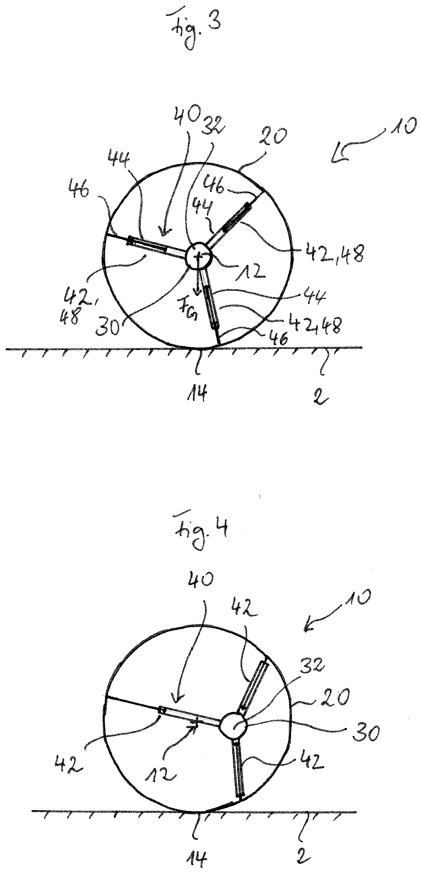

Das in den Fig. 3 und 4 dargestellte Rad 10 entspricht im Wesentlichen dem Rad 10 gemäß den Fig. 1 und 2. Es wird insoweit auf die Beschreibung zu den Fig. 1 und 2 verwiesen. Im Unterschied hierzu sind die Stützelemente 42 als teleskopierbare Speichen ausgebildet, welche aktiv ein- und ausgefahren werden können. Die Stützelemente 42 sind hierzu als Hubzylinder gestaltet und umfassen einen Zylinder 44, in welchem ein Kolben 46 mit einer Kolbenstange geführt ist. Der Hubzylinder, beispielsweise ein pneumatischer oder hydraulischer Zylinder, ist an der Nabe 30 und/oder dem Radring 20 schwenkbar gelagert. Die Zuführung des Betriebsmediums erfolgt vorzugsweise von innen, das heißt über die Nabe 30. Der Hubzylinder bildet ein Beispiel einer erfindungsgemäßen Verstelleinrichtung 48 zur Verstellung der Länge der Stützelemente 42 zwischen Nabe 30 und Radring 20.

Fig. 4 zeigt das Rad 10 entsprechend Fig. 2, in einer Antriebsstellung, in welcher ein Drehmoment auf das Rad 10 ausgeübt wird. Die Nabe 30 ist aus dem geometrischen Zentrum 12 durch eine entsprechende Verstellung der einzelnen Stützelemente 42 ausgelenkt. Die Gewichtskraft F_{G} zeigt nicht auf den Bodenaufstandspunkt 14, sodass ein Drehmoment auf das Rad 10 ausgeübt wird.

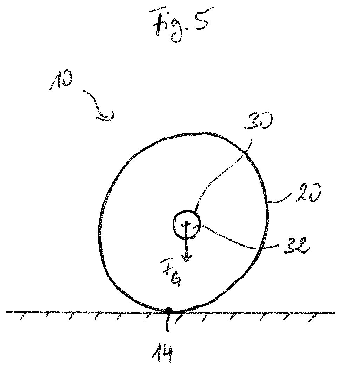

Fig. 5 zeigt eine weitere Ausführungsform eines erfindungsgemäßen Rades 10. Im Unterschied zu den Ausführungsformen nach Fig. 1 bis 4 ist der Radring 20 verformbar ausgeführt, so dass sich die äußere Kontur des Rades 10 beispielsweise zu einem Oval oder einer Ellipse verformen lässt. Die in der Fig. 5 nicht dargestellte Stützeinrichtung 40 mit Stützelemente 42 kann beispielsweise analog zu den Ausführungsformen gemäß Fig. 1 bis 4 ausgeführt sein. Durch die Verformung des äußeren Radrings 20 ist es möglich, die Nabe 30, obgleich diese im geometrischen Zentrum des Rades 10 beziehungsweise Radrings 20 angeordnet sein kann, in Fahrtrichtung zu verschieben, so dass die Gewichtskraft nicht auf den Bodenaufstandspunkt 14 gerichtet ist. Hierzu wird der äußere Radring 20 in einer zur Senkrechten schräg stehenden Richtung gestreckt, was mittels der Stützelemente 42 erfolgt.

Die Erfindung stellt somit ein Rad und ein Antriebskonzept für ein Rad bereit, welche ein drehendes Antreiben eines Rads durch aktive Verstellung der Nabe relativ zum Radring und/oder Verformung des Radrings ermöglichen. Durch das erfindungsgemäße Rad kann auf beispielsweise einen Elektromotor oder einen Verbrennungsmotor zum Antreiben des Rads verzichtet werden. Der Antrieb erfolgt dadurch, dass durch zwischen der Nabe und dem Radring angeordnete Stützelemente eine variierende Kraft ausgeübt wird, so dass durch eine auf die Nabe wirkende Kraft ein Hebel erzeugt und ein Drehmoment bewirkt wird.

### Bezugszeichenliste:

- 2: Bodenfläche
- 10: Rad
- 12: geometrisches Zentrum
- 14: Bodenaufstandspunkt
- 18: Umlaufbahn
- 20: Radring
- 30: Nabe
- 32: Bohrung
- 40: Stützeinrichtung
- 42: Stützelement
- 44: Zylinder
- 46: Kolben
- 48: Verstelleinrichtung
- 50: Steuerungseinrichtung

## Patentansprüche

1. Rad, aufweisend
einen äußeren Radring (20),
eine Nabe (30) und
mindestens eine Stützeinrichtung (40), mittels welcher der äußere Radring (20) an der Nabe (30) abgestützt ist,
wobei eine Verstelleinrichtung (48) vorgesehen ist, mittels welcher die Nabe (30) relativ zum äußeren Radring (20) verstellbar ist,
wobei die Stützeinrichtung (40) mehrere Stützelemente (42) aufweist, die sich zwischen der Nabe (30) und dem Radring (20) erstrecken,
**dadurch gekennzeichnet, dass**
die Stützelemente (42) dreidimensional derart angeordnet sind, dass sich die Nabe (30) relativ zum äußeren Radring (20) in fünf Freiheitsgraden verstellen läßt.

2. Rad nach Anspruch 1, wobei die Verstelleinrichtung (48) eingerichtet ist, die Nabe (30) in unterschiedliche Richtungen aus einem geometrischen Zentrum (12) des Rades (10), insbesondere kontinuierlich, auszulenken.

3. Rad nach einem der vorhergehenden Ansprüche, wobei die Verstelleinrichtung (48) eingerichtet ist, die Nabe (30) entlang einer Umlaufbahn (18) um ein geometrisches Zentrum (12) des äußeren Radrings (20) zu bewegen.

4. Rad nach einem der vorhergehenden Ansprüche,
wobei die Verstelleinrichtung (48) eingerichtet ist, die Länge der Stützelemente (42) zwischen der Nabe (30) und dem Radring (20) zu verändern.

5. Rad nach einem der vorhergehenden Ansprüche, wobei die Verstelleinrichtung (48) als Teleskopeinrichtung ausgebildet ist.

6. Rad nach einem der vorhergehenden Ansprüche, wobei die Verstelleinrichtung (48) elektromechanisch und/oder hydraulisch und/oder pneumatisch betrieben ist.

7. Rad nach einem der vorhergehenden Ansprüche, wobei die Stützeinrichtung (40) mehrere verformbare Stützelemente (42) aufweist, die sich zwischen der Nabe (30) und dem Radring (20) erstrecken, und wobei die Verstelleinrichtung (48) eingerichtet ist, die Elastizität und/oder die Vorspannung der Stützelemente (42) unabhängig voneinander zu verstellen.

8. Rad nach einem der vorhergehenden Ansprüche, wobei die Verstelleinrichtung (48) eingerichtet ist, die Position der Nabe (30) unter Beibehaltung der Form des Radrings (20) zu verstellen, und wobei insbesondere der Radring (20) als ein formstabiler bzw. steifer Ring ausgebildet ist.

9. Rad nach einem der Ansprüche 1 - 7, wobei die Verstelleinrichtung (48) eingerichtet ist, den äußeren Radring (20) während der Drehung des Rades (10) vorzugsweise kontinuierlich zu verformen.

10. Rad nach einem der vorhergehenden Ansprüche, wobei eine Steuerungseinrichtung (50) vorhanden ist, mittels welcher die Verstelleinrichtung (48) zum drehenden Antreiben des Rades (10) ansteuerbar ist.

11. Rad nach einem der vorhergehenden Ansprüche, wobei die Verstelleinrichtung (48) ausgelegt ist, ein Antriebsmoment auf den äußeren Radring (20) auszuüben und/oder eine Verzögerung des äußeren Radrings (20) zu bewirken, die zur Rekuperation nutzbar ist.

12. Verfahren zum Betreiben eines Rades (10), insbesondere nach einem der Ansprüche 1 - 11, wobei das Rad (10) einen äußeren Radring (20), eine Nabe (30) und mindestens eine Stützeinrichtung (40) aufweist, mittels welcher der äußere Radring (20) an der Nabe (30) abgestützt ist,
wobei die Nabe (30) relativ zum äußeren Radring (20) in fünf Freiheitsgraden verstellbar ist,
**dadurch gekennzeichnet, dass**
die Nabe (30) zum drehenden Antreiben des Rades (10) relativ zum äußeren Radring (20) verstellt wird, und
dass durch die genannten Freiheitsgrade eine Kontrolle von Spur, Sturz, Lenkwinkel und/oder eine Form der Federung bereitgestellt wird.

## Claims

1. A wheel (10), having
an outer wheel ring (20),
a hub (30), and
at least one support device (40) by way of which the outer wheel ring (20) is supported on the hub (30),
wherein an adjustment device (48) is provided by way of which the hub (30) is adjustable relative to the outer wheel ring (20), wherein the support device (40) has multiple support elements (42) which extend between the hub (30) and the outer wheel ring (20), **characterized in that**
the support elements (42) are three-dimensionally arranged such that the hub (30) can be adjusted in five degrees of freedom relative to the outer wheel ring (20).

2. The wheel (10) according to claim 1, wherein the adjustment device (48) is designed to deflect the hub (30), in different directions out of a geometrical center (12) of the wheel (10), preferably in a continuous fashion.

3. The wheel (10) according to any one of the preceding claims, wherein the adjustment device (48) is designed to move the hub (30) along an orbital path (18) about a geometrical center (12) of the outer wheel ring (20).

4. The wheel (10) according to any one of the preceding claims, wherein the adjustment device (48) is designed to vary the length of the support elements (42) between the hub (30) and the outer wheel ring (20).

5. The wheel (10) according to any one of the preceding claims, wherein the adjustment device (48) is in the form of a telescopic device.

6. The wheel (10) according to any one of the preceding claims, wherein the adjustment device (48) is electromechanically and/or hydraulically and/or pneumatically operated.

7. The wheel (10) according to any one of the preceding claims, wherein the support device (40) has multiple deformable support elements (42) which extend between the hub (30) and the outer wheel ring (20), and wherein the adjustment device (48) is designed to adjust the elasticity and/or the preload of the support elements (42) independently of one another.

8. The wheel (10) according to any one of the preceding claims, wherein the adjustment device (48) is designed to adjust the position of the hub (30) while maintaining the shape of the outer wheel ring (20), and wherein specifically, the outer wheel ring (20) is in the form of a dimensionally stable or rigid ring.

9. The wheel (10) according to any one of claims 1 to 7, wherein the adjustment device (48) is designed to deform the outer wheel ring (20), preferably in a continuous fashion, during the rotation of the wheel (10).

10. The wheel (10) according to one of the preceding claims, wherein a control device (50) is provided by way of which the adjustment device (48) can be actuated for the purposes of driving the wheel (10) in rotation.

11. The wheel (10) to any one of the preceding claims, wherein the adjustment device (48) is designed to exert a drive torque on the outer wheel ring (20) and/or to cause a deceleration of the outer wheel ring (20), usable for a recuperation action.

12. A method for driving a wheel (10), specifically according to any one of claims 1 to 11, wherein the wheel (10) has an outer wheel ring (20), a hub (30) and at least one support device (40) by way of which the outer wheel ring (20) is supported on the hub (30),
wherein the hub (30) is adjustable in five degrees of freedom relative to the outer wheel ring (20), **characterized in that**
the hub (30) is adjusted relative to the outer wheel ring (20) for the purposes of driving the wheel (10) in rotation, and
said degrees of freedom provide a control of wheel alignment, camber, steering angle and / or a form of the suspension.

## Revendications

1. Roue, comportant
un anneau de roue extérieur (20),
un moyeu (30) et
au moins un moyen de support (40) à l'aide duquel l'anneau de roue extérieur (20) est supporté sur le moyeu (30),
dans laquelle
il est prévu un moyen de réglage (48) à l'aide duquel le moyeu (30) peut être réglé par rapport à l'anneau de roue extérieur (20),
le moyen de support (40) comprenant plusieurs éléments de support (42) qui s'étendent entre ledit moyeu (30) et ledit anneau de roue (20),
**caractérisée en ce que**
les éléments de support (42) sont disposés de manière tridimensionnelle de telle sorte que le moyeu (30) peut être réglé suivant cinq degrés de liberté par rapport à l'anneau de roue extérieur (20).

2. Roue selon la revendication 1,
dans laquelle
le moyen de réglage (48) est conçu pour dévier le moyeu (30) dans différentes directions à partir d'un centre géométrique (12) de la roue (10), en particulier en continu.

3. Roue selon l'une des revendications précédentes,
dans laquelle
le moyen de réglage (48) est conçu pour déplacer le moyeu (30) le long d'une trajectoire (18) autour d'un centre géométrique (12) de l'anneau de roue extérieur (20).

4. Roue selon l'une des revendications précédentes,
dans laquelle
le moyen de réglage (48) est conçu pour modifier la longueur des éléments de support (42) entre le moyeu (30) et l'anneau de roue (20).

5. Roue selon l'une des revendications précédentes,
dans laquelle
le moyen de réglage (48) est réalisé sous forme de moyen télescopique.

6. Roue selon l'une des revendications précédentes,
dans laquelle
le moyen de réglage (48) est entraîné par voie électromécanique et/ou hydraulique et/ou pneumatique.

7. Roue selon l'une des revendications précédentes,
dans laquelle
le moyen de support (40) comprend plusieurs éléments de support (42) déformables qui s'étendent entre ledit moyeu (30) et ledit anneau de roue (20), et
le moyen de réglage (48) est conçu pour régler l'élasticité et/ou la précontrainte des éléments de support (42) indépendamment les uns des autres.

8. Roue selon l'une des revendications précédentes,
dans laquelle
le moyen de réglage (48) est conçu pour régler la position du moyeu (30) en conservant la forme de l'anneau de roue (20), et
en particulier, l'anneau de roue (20) est réalisé sous forme d'anneau de forme stable ou rigide.

9. Roue selon l'une des revendications 1 à 7,
dans laquelle
le moyen de réglage (48) est conçu pour déformer de préférence en continu l'anneau de roue extérieur (20) pendant la rotation de la roue (10).

10. Roue selon l'une des revendications précédentes,
dans laquelle
il est prévu un moyen de commande (50) permettant de piloter le moyen de réglage (48) en vue d'un entraînement en rotation de la roue (10).

11. Roue selon l'une des revendications précédentes,
dans laquelle
le moyen de réglage (48) est conçu pour exercer un couple d'entraînement sur l'anneau de roue extérieur (20) et/ou pour provoquer un ralentissement de l'anneau de roue extérieur (20) utilisable pour la récupération.

12. Procédé de fonctionnement d'une roue (10), en particulier selon l'une des revendications 1 à 11,
dans lequel
la roue (10) comprend un anneau de roue extérieur (20), un moyeu (30) et au moins un moyen de support (40) à l'aide duquel l'anneau de roue extérieur (20) est supporté sur le moyeu (30),
le moyeu (30) peut être réglé suivant cinq degrés de liberté par rapport à l'anneau de roue extérieur (20),
**caractérisé en ce que**
le moyeu (30) est réglé par rapport à l'anneau de roue extérieur (20) en vue d'un entraînement en rotation de la roue (10), et **en ce que** grâce auxdits degrés de liberté, on assure un contrôle du pincement, du carrossage, de l'angle de braquage et/ou une forme de la suspension.
